# EUROPEAN PATENT APPLICATION

(11) **EP 4 657 955 A1**
(43) Date of publication of application: **03.12.2025**
(21) Application number: 24784080.4
(22) Date of filing: 21.03.2024
(51) Int. Cl.: H04W 72/21

(54) **CONFIGURED GRANT-BASED COMMUNICATION METHOD AND APPARATUS**

(30) Priority: 07.04.2023 CN 202310406137
(71) Applicant: Huawei Technologies Co., Ltd., Shenzhen, Guangdong 518129 (CN)
(72) Inventor: XU, Rui, Shenzhen, Guangdong 518129 (CN); PANG, Xu, Shenzhen, Guangdong 518129 (CN); QIN, Yi, Shenzhen, Guangdong 518129 (CN); MI, Xiang, Shenzhen, Guangdong 518129 (CN); CAO, Youlong, Shenzhen, Guangdong 518129 (CN)
(74) Representative: Gill Jennings & Every LLP
(86) International application number: PCT/CN2024/083112
(87) International publication number: WO 2024/207995

(57) **Abstract**

A configured grant-based communication method and apparatus are provided. The method includes: An access network device sends configuration information to a terminal, where the configuration information is used to configure a first CG transmission occasion that carries indication information and a first time period in which the indication information functions; and the terminal then sends the indication information on the first transmission occasion based on the configuration information, where the indication information indicates a used or unused CG transmission occasion in the first time period. In this way, the access network device can determine an unused transmission occasion based on the indication information, so as to allocate an unused resource to another terminal, improving resource utilization. In addition, when the terminal sends the indication information on the first transmission occasion, there is no need to additionally indicate the first time period in which the indication information functions, reducing signaling overheads.

## Description

### CROSS-REFERENCE TO RELATED APPLICATIONS

This application claims priority to Chinese Patent Application No. 202310406137.6, filed with the China National Intellectual Property Administration on April 7, 2023 and entitled "CONFIGURED GRANT-BASED COMMUNICATION METHOD AND APPARATUS", which is incorporated herein by reference in its entirety.

### TECHNICAL FIELD

This application relates to the field of communication technologies, and in particular, to a configured grant-based communication method and apparatus.

### BACKGROUND

With continuous development of a wireless communication system, a data transmission delay is continuously reduced, and a transmission capacity is increasingly large. The wireless communication system gradually penetrates into some services with high real-time performance and large data capacity requirements, such as video transmission, cloud gaming (cloud gaming, CG), and extended reality (extended reality, XR). The XR is an environment that combines a real world and a virtual world, that supports human-computer interaction, and that is generated by using a computer technology and a wearable device, and is a collective term of various forms such as augmented reality (augmented reality, AR), virtual reality (virtual reality, VR), and mixed reality (mixed reality, MR).

An XR service is used as an example. A data frame of the XR service may be transmitted between an access network device and a terminal in a semi-persistent scheduling manner. For example, the access network device may configure a plurality of transmission occasions for transmission of one data frame, and a data amount that can be carried on the plurality of transmission occasions may be greater than a data amount of the data frame. Consequently, some of the plurality of transmission occasions are not used, and transmission resources are wasted.

### SUMMARY

This application provides a communication method and apparatus, to enable a terminal to notify an access network device of an unused transmission occasion, so that the access network device allocates an unused resource to another terminal, improving resource utilization.

**According to a first aspect,** an embodiment of this application provides a communication method. The method may be applied to a terminal or a module (for example, a circuit or a chip) in the terminal, or may be applied to a logical node, a logical module, or software that can implement all or some functions of the terminal. The method may include: receiving configuration information, where the configuration information is used to configure a first CG transmission occasion that carries indication information and a first time period in which the indication information functions, and the indication information indicates a used or unused CG transmission occasion in the first time period; and sending the indication information on the first CG transmission occasion.

According to the foregoing method, the terminal may send the indication information to an access network device on the first transmission occasion based on first configuration information, to notify the access network device of an unused transmission occasion, so that the access network device allocates an unused resource to another terminal, improving resource utilization. In addition, because the access network device uniformly configures, by using the first configuration information, a first transmission occasion and the first time period in which the indication information functions. Therefore, when the terminal sends the indication information, there is no need to additionally indicate the first time period in which the indication information functions, reducing signaling overheads.

In a possible design, the configuration information is further used to configure a CG transmission occasion in a CG cycle time period, the CG transmission occasion in the CG cycle time period includes the first CG transmission occasion, and the CG cycle time period includes the first time period. In this way, the configuration information can be used to implicitly configure the first transmission occasion and the first time period by configuring the CG transmission occasion in the CG cycle time period, reducing signaling overheads, and implementation is simple.

In a possible design, the first CG transmission occasion and a used or unused CG transmission occasion in the first time period correspond to a same CG or different CGs.

In other words, the first CG transmission occasion and the used or unused CG transmission occasion in the first time period may belong to a same set of CGs, or may belong to different sets of CGs, so that the foregoing solution is applicable to a plurality of scenarios in which CG transmission occasions are configured. In addition, when the first CG transmission occasion and the used or unused CG transmission occasion in the first time period belong to different CGs, the indication information carried on the first CG transmission occasion may function on different CG transmission occasions, so that configuration is more flexible.

In a possible design, the first CG transmission occasion is a 1^{st} CG transmission occasion in the first time period. In this way, the indication information is sent on the 1^{st} transmission occasion, so that the access network device learns of an unused transmission occasion as early as possible.

In a possible design, the indication information indicates a second time period, and the first time period includes the second time period; and the used or unused CG transmission occasion in the first time period is located in the second time period.

In this way, because the used or unused CG transmission occasion in the first time period is located in the second time period, the indication information may indicate whether a transmission occasion in the second time period is used, and does not need to indicate whether all transmission occasions in the first time period are used, saving transmission resources.

In a possible design, the indication information includes a bitmap. In this way, the bitmap may indicate that consecutive CG transmission occasions are not used, or may indicate that non-consecutive CG transmission occasions are not used, so that indication is more flexible.

In a possible design, one bit in the bitmap indicates a plurality of used or unused CG transmission occasions. In this way, because one bit may indicate a plurality of used or unused CG transmission occasions, a bit width of the bitmap is reduced, and transmission resources are saved.

In a possible design, a bit width of the bitmap is configured by using the configuration information. In other words, the access network device may implicitly configure the first time period by configuring the bit width of the bitmap. This helps a network side and a terminal side clearly determine the bit width of the bitmap, facilitating decoding of the indication information.

**According to a second aspect,** an embodiment of this application provides a communication method. The method may be applied to an access network device or a module (for example, a circuit or a chip) in the access network device, or may be applied to a logical node, a logical module, or software that can implement all or some functions of the access network device. The method may include: sending configuration information, where the configuration information is used to configure a first CG transmission occasion that carries indication information and a first time period in which the indication information functions, and the indication information indicates a used or unused CG transmission occasion in the first time period; and receiving the indication information on the first CG transmission occasion.

In a possible design, the configuration information is further used to configure a CG transmission occasion in a CG cycle time period, the CG transmission occasion in the CG cycle time period includes the first CG transmission occasion, and the CG cycle time period includes the first time period.

In a possible design, the first CG transmission occasion and a used or unused CG transmission occasion in the first time period correspond to a same CG or different CGs.

In a possible design, the first CG transmission occasion is a 1^{st} CG transmission occasion in the first time period.

In a possible design, the indication information indicates a second time period, and the first time period includes the second time period; and the used or unused CG transmission occasion in the first time period is located in the second time period.

In a possible design, the indication information includes a bitmap.

In a possible design, one bit in the bitmap indicates a plurality of used or unused CG transmission occasions.

In a possible design, a bit width of the bitmap is configured by using the configuration information.

It may be understood that the method described in the second aspect corresponds to the method described in the first aspect. For beneficial effects of related technical features in the second aspect, refer to the descriptions in the first aspect. Details are not described again.

**According to a third aspect,** this application provides a communication apparatus. The communication apparatus may be a terminal or a module (for example, a circuit or a chip) in the terminal, or may be a logical node, a logical module, or software that can implement all or some functions of the terminal. The communication apparatus has a function of implementing the first aspect. For example, the communication apparatus includes a corresponding module, unit, or means for performing the operations in the first aspect. The module, unit, or means may be implemented by software, may be implemented by hardware, or may be implemented by hardware executing corresponding software.

In a possible design, the communication apparatus includes a processing unit and an interface unit. The interface unit may be configured to receive and send signals, to implement communication between the communication apparatus and another apparatus. The processing unit may be configured to perform some internal operations of the communication apparatus. Functions performed by the processing unit and the interface unit may correspond to the operations in the first aspect.

In a possible design, the communication apparatus includes a processor, and the processor may be configured to be coupled to a memory. The memory may store a computer program or instructions necessary for implementing the functions in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor and a memory. The memory may store a computer program or instructions necessary for implementing the functions in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor and an interface circuit. The processor is configured to: communicate with another apparatus through the interface circuit, and perform the method according to any one of the possible designs or implementations of the first aspect.

**According to a fourth aspect,** this application provides a communication apparatus. The communication apparatus may be an access network device or a module (for example, a circuit or a chip) in the access network device, or may be a logical node, a logical module, or software that can implement all or some functions of the access network device. The communication apparatus has a function of implementing the second aspect. For example, the communication apparatus includes a corresponding module, unit, or means for performing the operation in the second aspect. The module, unit, or means may be implemented by software, may be implemented by hardware, or may be implemented by hardware executing corresponding software.

In a possible design, the communication apparatus includes a processing unit and an interface unit. The interface unit may be configured to receive and send signals, to implement communication between the communication apparatus and another apparatus. The processing unit may be configured to perform some internal operations of the communication apparatus. Functions performed by the processing unit and the interface unit may correspond to the operations in the second aspect.

In a possible design, the communication apparatus includes a processor, and the processor may be configured to be coupled to a memory. The memory may store a computer program or instructions necessary for implementing the functions in the second aspect. The processor may execute the computer program or the instructions stored in the memory. When the computer program or the instructions are executed, the communication apparatus is enabled to implement the method according to any one of the possible designs or implementations of the second aspect.

In a possible design, the communication apparatus includes a processor and a memory. The memory may store a computer program or instructions necessary for implementing the functions in the second aspect. The processor may execute the computer program or the instructions stored in the memory. When the computer program or the instructions are executed, the communication apparatus is enabled to implement the method according to any one of the possible designs or implementations of the second aspect.

In a possible design, the communication apparatus includes a processor and an interface circuit. The processor is configured to: communicate with another apparatus through the interface circuit, and perform the method according to any one of the possible designs or implementations of the second aspect.

It may be understood that in the third aspect or the fourth aspect, the processor may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and there may be one or more memories. The memory may be integrated with the processor, or the memory and the processor are arranged separately. In a specific implementation process, the memory and the processor may be integrated into one chip, or may be arranged on different chips. A type of the memory and a manner in which the memory and the processor are arranged are not limited in embodiments of this application.

**According to a fifth aspect,** this application provides a communication system. The communication system may include the communication apparatus according to the third aspect and the communication apparatus according to the fourth aspect. For example, the communication system includes a terminal and an access network device. The terminal is configured to perform the communication method according to the first aspect, and the access network device is configured to perform the communication method according to the second aspect.

**According to a sixth aspect,** this application provides a computer-readable storage medium. The computer storage medium stores computer-readable instructions. When a computer reads and executes the computer-readable instructions, the computer is enabled to perform the method according to any one of the possible designs of the first aspect or the second aspect.

**According to a seventh aspect,** this application provides a computer program product. When a computer reads and executes the computer program product, the computer is enabled to perform the method according to any one of the possible designs of the first aspect or second aspect.

**According to an eighth aspect,** this application provides a chip. The chip includes a processor. The processor is coupled to a memory to read and execute a software program stored in the memory, to implement the method according to any one of the possible designs of the first aspect or second aspect.

### BRIEF DESCRIPTION OF DRAWINGS

FIG. 1 is a diagram of a network architecture to which an embodiment of this application is applicable;
FIG. 2A is a diagram of transmission of a plurality of data frames according to an embodiment of this application;
FIG. 2B to FIG. 2E show several examples in which data frames correspond to transmission occasions according to an embodiment of this application;
FIG. 3A is a diagram of mismatch between data frames and transmission occasions according to an embodiment of this application;
FIG. 3B to FIG. 3D show several examples of transmission occasions with an irregular cycle according to an embodiment of this application;
FIG. 4 is a schematic flowchart corresponding to a communication method according to an embodiment of this application;
FIG. 5A to FIG. 5C show several examples of first transmission occasions and first time periods according to an embodiment of this application;
FIG. 6A to FIG. 6D show several examples of indicating a used or unused transmission occasion according to an embodiment of this application;
FIG. 7 is a block diagram of a possible example of an apparatus according to an embodiment of this application;
FIG. 8 is a diagram of a structure of a terminal according to an embodiment of this application; and
FIG. 9 is a diagram of a structure of an access network device according to an embodiment of this application.

### DESCRIPTION OF EMBODIMENTS

The following describes technical solutions in embodiments of this application with reference to accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system such as a long term evolution (long term evolution, LTE) system, a 5th generation (5th generation, 5G) mobile communication system like new radio (new radio, NR) system, and a future evolved communication system like a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

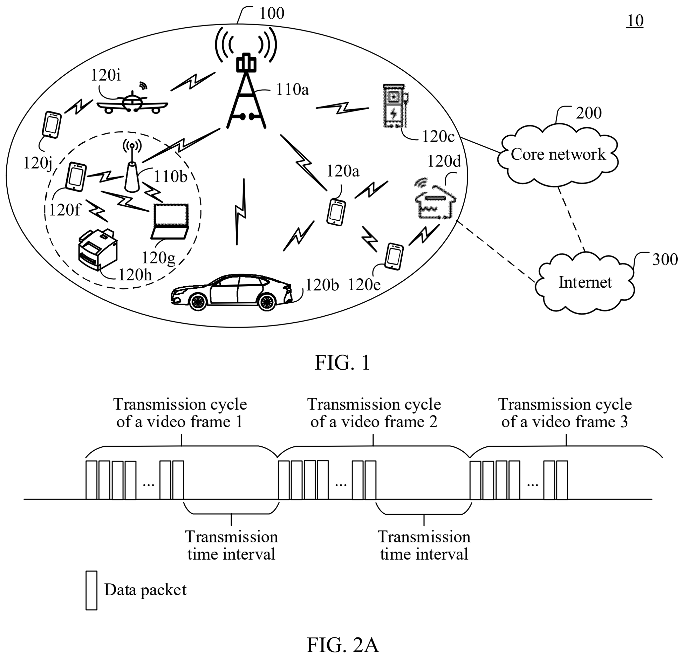

For ease of understanding embodiments of this application, FIG. 1 is a possible and non-limiting diagram of a system. As shown in FIG. 1, a communication system 10 includes a radio access network (radio access network, RAN) 100 and a core network (core network, CN) 200. Optionally, the communication system 10 may further include an internet 300.

The RAN 100 includes at least one RAN node (for example, 110a and 110b in FIG. 1, which are collectively referred to as 110) and at least one terminal (for example, 120a to 120j in FIG. 1, which are collectively referred to as 120). 110a is a base station, 110b is a micro base station, 120a, 120e, 120f, and 120j are mobile phones, 120b is a vehicle, 120c is a fuel dispenser, 120d is a home access node (home access point, HAP) deployed indoors or outdoors, 120g is a notebook computer, 120h is a printer, and 120i is an uncrewed aerial vehicle.

The RAN 100 may further include other RAN nodes, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices respectively, or may be a same physical device that integrates a core network logical function and a radio access network logical function.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). Alternatively, the RAN 100 may be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may also be sometimes referred to as a RAN entity, an access node, or the like, and forms a part of the communication system, to help a terminal implement radio access. A plurality of RAN nodes 110 in the communication system 10 may be nodes of a same type, or may be nodes of different types. In some scenarios, roles of the RAN node 110 and the terminal 120 are relative to each other. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Both the RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

The RAN node may also have different expressions, for example, an access network device. In this application, unless otherwise specified, the access network device is used for expression.

In a possible scenario, the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle, a vehicle-mounted device, or the like. For example, the access network device in a vehicle-to-everything (vehicle-to-everything, V2X) technology may be a road side unit (road side unit, RSU). All or some functions of the access network device in this application may alternatively be implemented through a software function running on hardware, or may be implemented through a virtualization function instantiated on a platform (for example, a cloud platform). Alternatively, the access network device in this application may be a logical node, a logical module, or software that can implement all or some functions of the access network device.

In another possible scenario, a plurality of access network devices cooperate to assist the terminal in implementing radio access, and different access network devices respectively implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), Internet of Things (Internet of Things, IOT), virtual reality, augmented reality, industrial control, autonomous driving, telemedicine, a smart grid, smart furniture, a smart office, smart wearables, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

In embodiments of this application, "sending information to... (a terminal)" may be understood as that a destination end of the information is the terminal, and may include directly or indirectly sending information to the terminal. "Receiving information from... (a terminal)" may be understood as that a source end of the information is the terminal, and may include directly or indirectly receiving information from the terminal. Necessary processing, such as a format change, may be performed on information between a source end and a destination end for sending the information. However, the destination end can understand valid information from the source end. A similar expression in this application may be understood similarly, and details are not described herein.

A communication system and a service scenario described in embodiments of this application are intended to describe the technical solutions in embodiments of this application more clearly, and do not constitute a limitation to the technical solutions provided in embodiments of this application. A person of ordinary skill in the art may learn that, with evolution of a network architecture and emergence of a new service scenario, the technical solutions provided in embodiments of this application are also applicable to similar technical problems.

The following first explains and describes related terms in embodiments of this application. It should be noted that these explanations are intended to make embodiments of this application easier to understand, but should not be construed as a limitation to the protection scope claimed in this application.

### 1. Data frame

A data frame may also be referred to as a data slice (slice) or a data tile (tile). For a service (for example, an XR service), the service may include at least one data frame or at least one protocol data unit (protocol data unit, PDU) set (PDU set), and one PDU set may include at least one data frame.

In embodiments of this application, the data frame may be a video frame, an audio frame, or another possible frame.

### (1) Transmission cycle of a data frame

An example in which a data frame is a video frame is used. A video may be formed by consecutively playing consecutive images (pictures, photos, or the like). When 24 images are quickly played per second, human eyes consider that the images are consecutive pictures (that is, a video). A frame rate indicates a quantity of images played per second. For example, if the frame rate is 24 frames per second (frame per second, FPS), it indicates that 24 images are played per second; if the frame rate is 60 FPS, it indicates that 60 images are played per second; and so on.

An XR service is used as an example. A service model of the XR service is usually that a video frame arrives periodically based on a frame rate. When the frame rate is 60 FPS, in an ideal case, a transmission cycle of the video frame is 1000/60=50/3 milliseconds (ms), approximately equal to 16.67 ms, that is, one video frame arrives every 16.67 ms.

FIG. 2A is a diagram of transmission of a plurality of video frames. As shown in FIG. 2A, a video frame 1, a video frame 2, and a video frame 3 are three consecutive video frames. For example, if a frame rate is 60 FPS, a transmission cycle of the video frame is 1000/60=50/3 milliseconds (ms), which is approximately equal to 16.67 ms. The video frame 1 is used as an example. The video frame 1 includes a plurality of data packets. For example, the plurality of data packets may be distributed in a front segment of a transmission cycle of the video frame 1 (for example, the plurality of data packets may be distributed in the first 8 ms of 16.67 ms). In other words, a transmission time gap (gap) may exist between different video frames.

### (2) Data amount of a data frame

An example in which a data frame is a video frame is still used. One video frame may be understood as one image. One video frame may include one or more data packets corresponding to one image, and a data amount of one video frame is a sum of data amounts of the one or more data packets included in the video frame.

Further, data amounts of different video frames of a same service may be different. There are a plurality of reasons for a difference in data amounts of different video frames. For example, for two consecutive video frames (for example, the video frame 1 and the video frame 2 in FIG. 2A), compression ratios of the video frame 1 and the video frame 2 may be different, and coding types may also be different (for example, a coding type of the video frame 1 is intra coding, and a coding type of the video frame 2 is inter prediction coding). Consequently, data amounts of the video frame 1 and the video frame 2 are different.

### 2. Semi-persistent scheduling

An access network device may schedule uplink and downlink transmission resources for a terminal in two manners: dynamic scheduling and semi-persistent scheduling. In the dynamic scheduling, the access network device may send control information to the terminal through a control channel, to allocate a transmission parameter of a data channel to the terminal. The control channel is, for example, a physical downlink control channel (physical downlink control channel, PDCCH). The control information may be, for example, downlink control information (downlink control information, DCI). The data channel may be, for example, a physical downlink shared channel (physical downlink shared channel, PDSCH) or a physical uplink shared channel (physical uplink shared channel, PUSCH). For example, the control information may indicate a time-frequency position to which the data channel is mapped (for example, a time domain symbol or a frequency domain resource block (resource block, RB) to which the data channel is mapped), so that the access network device and the terminal may perform transmission of downlink data (for example, data borne on the PDSCH) and/or uplink data (for example, data borne on the PUSCH) through the data channel at the time-frequency position.

In the semi-persistent scheduling, the access network device may allocate periodic uplink and downlink transmission resources to the terminal. Using uplink transmission resources as an example, semi-persistent scheduling used to allocate uplink transmission resources may be referred to as a configured grant (configured grant, CG). Further, a transmission resource for performing one uplink transmission may be referred to as a CG transmission occasion (which may be referred to as a transmission occasion for short), and the CG transmission occasion may alternatively be replaced with another possible description, for example, a CG resource, a PUSCH resource, a PUSCH opportunity, or a PUSCH occasion.

The following describes a transmission occasion configuration manner.
**(1)** In a possible implementation, the access network device may first configure some parameters (such as a CG cycle and a CG index) of at least one set of transmission occasions for the terminal by using a radio resource control (radio resource control, RRC) message. For example, the RRC message may include a ConfiguredGrantConfig (or CG-Config) field corresponding to each set of transmission occasions in the at least one set of transmission occasions, and parameters such as a CG cycle and a CG index of each set of transmission occasions may be carried in the CG-Config field corresponding to the set of transmission occasions. One set of transmission occasions may include a plurality of transmission occasions that periodically appear. The CG index is used to distinguish between different sets of transmission occasions, and a same set of transmission occasions correspond to a same CG index. The CG index may be configured by using a ConfiguredGrantConfigIndex parameter in the ConfiguredGrantConfig field. The CG index may also have another possible name, and this is not limited in embodiments of this application.

Further, for each set of transmission occasions in the at least one set of transmission occasions, the access network device may send an activation command to the terminal. The activation command is used to activate the set of transmission occasions, and the activation command may be, for example, DCI in a PDCCH. For example, the activation command may include other parameters of the set of transmission occasions. For example, the other parameters include a parameter 1 and a parameter 2. The parameter 1 indicates a frequency domain position of each transmission occasion in the set of transmission occasions, and frequency domain positions of different transmission occasions belonging to a same set of transmission occasions are the same. The parameter 2 indicates a time domain position of each transmission occasion in the set of transmission occasions, and time domain lengths of different transmission occasions belonging to a same set of transmission occasions are the same, where the time domain length of the transmission occasion may be a quantity of consecutive symbols of the transmission occasion in time domain.

The parameter 1 may indicate a frequency domain position of a transmission occasion in a plurality of manners. For example, in a manner 1, the parameter 1 includes a bitmap, and the bitmap indicates a resource block group (resource block group, RBG) included in the transmission occasion; and in a manner 2, the parameter 1 includes a resource indication value (resource indication value, RIV), and the RIV indicates a start RB (which may be represented as RBₛₜₐᵣₜ) of the transmission occasion and a quantity of consecutive RBs (which may be represented as L_{RB}) in frequency domain.

The parameter 2 may indicate a time domain position of a transmission occasion in a plurality of manners. For example, the parameter 2 includes a time domain resource assignment (time domain resource assignment, TDRA) field, and the TDRA field includes K2 and a start and length indicator value (start and length indicator value, SLIV). K2 indicates a slot (slot) offset value between the activation command and a transmission occasion (for example, a 1^{st} transmission occasion in the set of transmission occasions), and the SLIV indicates a start symbol position of the transmission occasion and a time domain length of each transmission occasion in the set of transmission occasions.

**(2)** In another possible implementation, the access network device configures a CG cycle of each set of transmission occasions in the at least one set of transmission occasions and indicates a specific time-frequency position by using an RRC message. For example, the specific time-frequency position is indicated by using a parameter 1 and a parameter 2. In this case, the CG cycle, the parameter 1, and the parameter 2 are all carried in the RRC message, and once the terminal correctly receives the RRC message, the configuration takes effect immediately (in other words, the configuration is activated immediately).

### 3. Enhanced semi-persistent scheduling technology

Different XR services usually have different uplink and downlink service models. For example, for a VR service, a display change of scenario content is caused by a posture or a position (action) of a user. Therefore, uplink transmission mainly includes position and posture information, and a data amount is small, usually only dozens of kbps; and downlink transmission mainly includes a rendered video stream, and a data amount is large and may reach dozens to hundreds of Mbps. For an AR service, a display change of scenario content is caused by a change of a fixation focus target and a change (action) of a spatial relationship between a position and a fixation point. Therefore, content of uplink transmission includes visual information (including a depth) needed for perception. Uplink transmission mainly includes a clear and stable picture or video stream, and a data amount is large, or may include some extracted environment characteristic information.

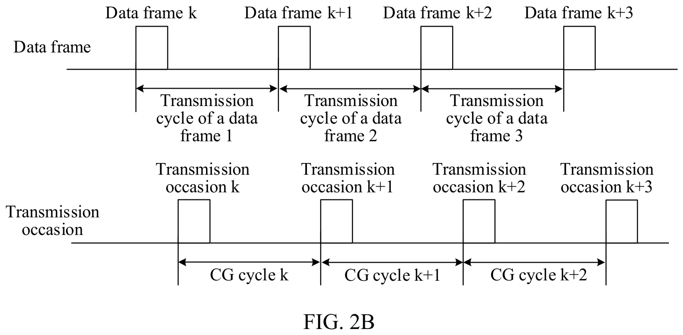

The uplink transmission is used as an example. After the access network device configures and activates a set of transmission occasions for the terminal by using a CG, the terminal may send a data frame to the access network device on the set of transmission occasions. Generally, only one transmission occasion can be configured in each CG cycle time period, that is, only one transport block (transport block, TB) can be transmitted in each CG cycle time period. For example, the CG cycle configured by the access network device matches the transmission cycle of the data frame (where there may be a plurality of specific matching manners, for example, the CG cycle and the transmission cycle are the same, and this is not limited in embodiments of this application), so that one data frame corresponds to one transmission occasion, that is, one data frame is transmitted on one transmission occasion. For example, as shown in FIG. 2B, assuming that the CG cycle is the same as the transmission cycle of the data frame, the terminal may perform transmission of a data frame k on a transmission occasion k, perform transmission of a data frame k+1 on a transmission occasion k+1, perform transmission of a data frame k+2 on a transmission occasion k+2, and so on.

In this application, the CG cycle may represent CG cycle time length. For example, the CG cycle is 50 ms. The CG cycle time period may represent a period of time with the CG cycle time length. For example, the CG cycle time period is from a time point a to a time point b, and a time length between the time point a and the time point b is the CG cycle.

However, for a service (for example, the AR service) with a large uplink data amount, if one transmission occasion is configured in one CG cycle time period, data transmission may fail to be completed. To resolve this problem, embodiments of this application provide several enhanced semi-persistent scheduling technologies, to meet a transmission requirement of a large data amount. The following describes, with reference to Configuration manner 1 to Configuration manner 3, the enhanced semi-persistent scheduling technologies provided in embodiments of this application.

### (1) Configuration manner 1A

In Configuration manner 1A, the access network device may configure a set of transmission occasions with a short CG cycle for the terminal, to form dense transmission occasions, so that a transmission cycle of each data frame includes a plurality of transmission occasions, and the terminal can have sufficient resources to perform transmission of the data frame.

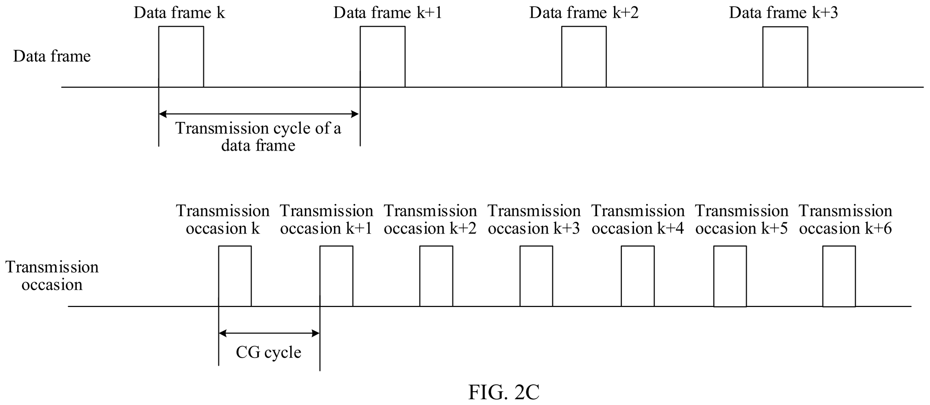

For example, as shown in FIG. 2C, assuming that the CG cycle is equal to half of the transmission cycle of the data frame, the transmission cycle of each data frame includes two transmission occasions. For example, the terminal may perform transmission of a data frame k on a transmission occasion k and a transmission occasion k+1, perform transmission of a data frame k+1 on a transmission occasion k+2 and a transmission occasion k+3, perform transmission of a data frame k+2 on a transmission occasion k+4 and a transmission occasion k+5, and so on.

### (2) Configuration manner 2A

In Configuration manner 2A, the access network device may configure a set of transmission occasions for the terminal, and each CG cycle time period of the set of transmission occasions includes a plurality of transmission occasions, so that a transmission cycle of each data frame includes a plurality of transmission occasions.

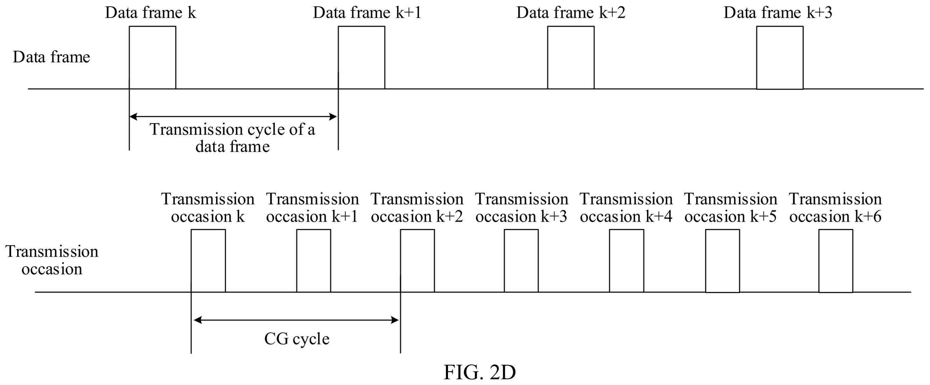

For example, as shown in FIG. 2D, the CG cycle is equal to the transmission cycle of the data frame, one CG cycle time period includes two transmission occasions, and the terminal may perform transmission of a data frame on the two transmission occasions included in each transmission cycle. For example, the terminal performs transmission of a data frame k on a transmission occasion k and a transmission occasion k+1, performs transmission of a data frame k+1 on a transmission occasion k+2 and a transmission occasion k+3, performs transmission of a data frame k+2 on a transmission occasion k+4 and a transmission occasion k+5, and so on.

### (3) Configuration manner 3A

In Configuration manner 3A, the access network device may configure, for the terminal, a plurality of sets of transmission occasions that have a same CG cycle but different time domain start positions, so that a transmission cycle of each data frame includes a plurality of transmission occasions.

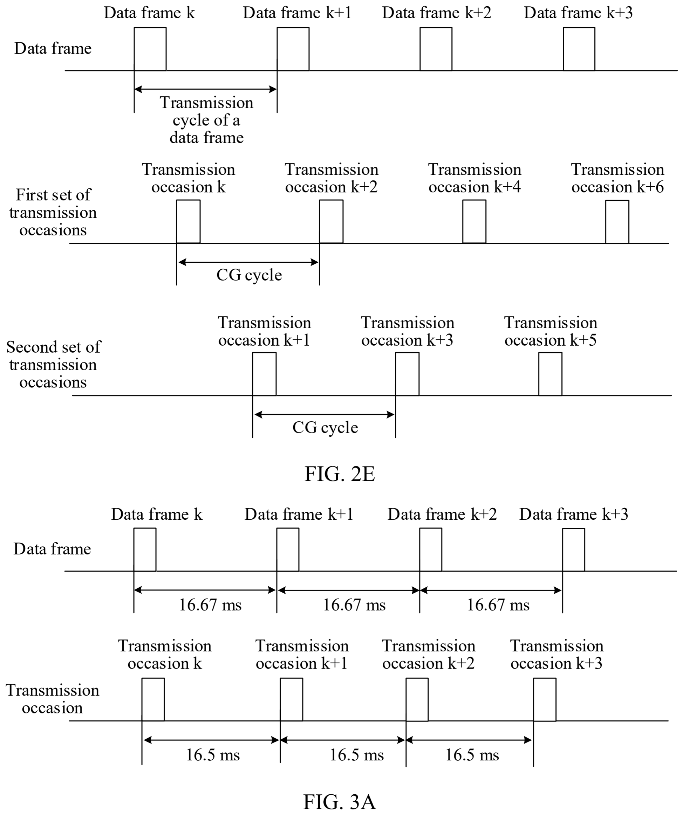

For example, as shown in FIG. 2E, the access network device may configure, for the terminal, two sets of transmission occasions that have a same CG cycle but different time domain start positions. A CG cycle of a first set of transmission occasions and a CG cycle of a second set of transmission occasions are both equal to the transmission cycle of the data frame. For example, the terminal performs transmission of a data frame k on a transmission occasion k and a transmission occasion k+1, performs transmission of a data frame k+1 on a transmission occasion k+2 and a transmission occasion k+3, performs transmission of a data frame k+2 on a transmission occasion k+4 and a transmission occasion k+5, and so on.

It may be understood that differences between Configuration manner 1, Configuration manner 2, and Configuration manner 3 and the semi-persistent scheduling described above are mainly described herein. For content other than the differences, refer to the semi-persistent scheduling described above.

### 4. Transmission occasions with an irregular cycle

A minimum unit of the CG cycle is a slot, but the transmission cycle of the data frame may not be an integer multiple of the slot (for example, the data frame is a video frame, and when the frame rate is 60 FPS, the transmission cycle of the data frame is 50/3 ms, not an integer multiple of the slot). Therefore, if a set of transmission occasions are configured for transmission of the data frame of the XR service, the CG cycle may not match the transmission cycle of the data frame.

For example, as shown in FIG. 3A, a cycle of a set of transmission occasions configured by the access network device for the terminal device is 16.5 ms, and the set of transmission occasions may include a transmission occasion k, a transmission occasion k+1, a transmission occasion k+2, a transmission occasion k+3, and the like. When a data frame k arrives, because arrival time of the data frame k is before start time of the transmission occasion k, the terminal may send the data frame k on the transmission occasion k; when a data frame k+1 arrives, because arrival time of the data frame k+1 is before start time of the transmission occasion k+1, the terminal may send the data frame k+1 on the transmission occasion k+1; and when a data frame k+2 arrives, because arrival time of the data frame k+2 is later than start time of the transmission occasion k+2, the terminal cannot send the data frame k+2 on the transmission occasion k+2. Consequently, no data is transmitted on the transmission occasion k+2.

For the foregoing problem, a set of transmission occasions with an irregular cycle may be configured, so that the transmission occasion matches the arrival time of the data frame. The following describes three possible configuration manners: Configuration manner 1B, Configuration manner 2B, and Configuration manner 3B.

### (1) Configuration manner 1B

The access network device may configure a CG cycle and an offset list (offset list) for the terminal. For example, if the frame rate of the data frame is 60 FPS (that is, the transmission cycle of the data frame is approximately 16.67 ms), the CG cycle may be configured to 50 ms, and the offset list may be configured to [0 17 34], that is, offset(0)=0 ms, offset(1)=17 ms, and offset(2)=34 ms. Therefore, the 50 ms CG cycle time period includes three small cycle time periods: 0 ms to 17 ms, 17 ms to 34 ms, and 34 ms to 50 ms.

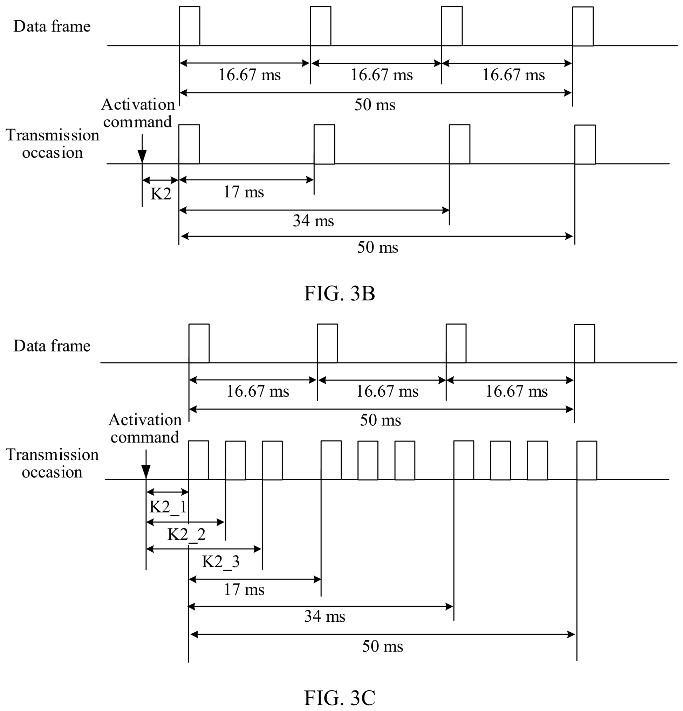

In addition, if the access network device configures one K2 for the terminal by using the activation command, each small cycle time period includes one transmission occasion, as shown in FIG. 3B. In this case, the terminal may determine a position of a 1^{st} transmission occasion (that is, a transmission occasion in a 1^{st} small cycle time period) in the set of transmission occasions based on K2 and offset(0), determine a position of a 2^{nd} transmission occasion (that is, a transmission occasion in a 2^{nd} small cycle time period) in the set of transmission occasions based on K2 and offset(1), and determine a position of a 3^{rd} transmission occasion (that is, a transmission occasion in a 3^{rd} small cycle time period) in the set of transmission occasions based on K2 and offset(2).

If the access network device configures n K2s (n is an integer greater than 1) for the terminal by using the activation command, each small cycle time period includes n transmission occasions, as shown in FIG. 3C. In this case, an example in which the n K2s are K2_1, K2_2, and K2_3 respectively is used. The terminal may determine a position of a 1^{st} transmission occasion (that is, a 1^{st} transmission occasion in a 1^{st} small cycle time period) in the set of transmission occasions based on K2_1 and offset(0), determine a position of a 2^{nd} transmission occasion (that is, a 2^{nd} transmission occasion in the 1^{st} small cycle time period) in the set of transmission occasions based on K2_2 and offset(0), and determine a position of a 3^{rd} transmission occasion (that is, a 3^{rd} transmission occasion in the 1^{st} small cycle time period) in the set of transmission occasions based on K2_3 and offset(0). In addition, the terminal may determine a position of a 1^{st} transmission occasion in a 2^{nd} small cycle time period based on K2_1 and offset(1), determine a position of a 2^{nd} transmission occasion in the 2^{nd} small cycle time period based on K2_2 and offset(1), and so on. Details are not described again.

It may be understood that, in the case shown in FIG. 3C, the access network device may alternatively configure only K2_1, and does not configure K2_2 and K2_3. In this case, a transmission occasion in each small cycle time period may be located on consecutive slots or consecutive uplink slots by default.

### (2) Configuration manner 2B

The access network device may configure a CG cycle and a cycle list (cycle list) for the terminal. For example, if the frame rate of the data frame is 60 FPS (that is, the transmission cycle of the data frame is approximately 16.67 ms), the CG cycle may be configured to 50 ms, and the cycle list may be configured to [17 17 16], that is, cycle(0)=17 ms, cycle(1)=17 ms, and cycle(2)=16 ms. Therefore, the 50 ms CG cycle time period includes three small cycle time periods: 0 ms to 17 ms, 17 ms to 34 ms, and 34 ms to 50 ms. One small cycle time period may include one or more transmission occasions. For example, refer to the descriptions of FIG. 3B and FIG. 3C.

### (3) Configuration manner 3B

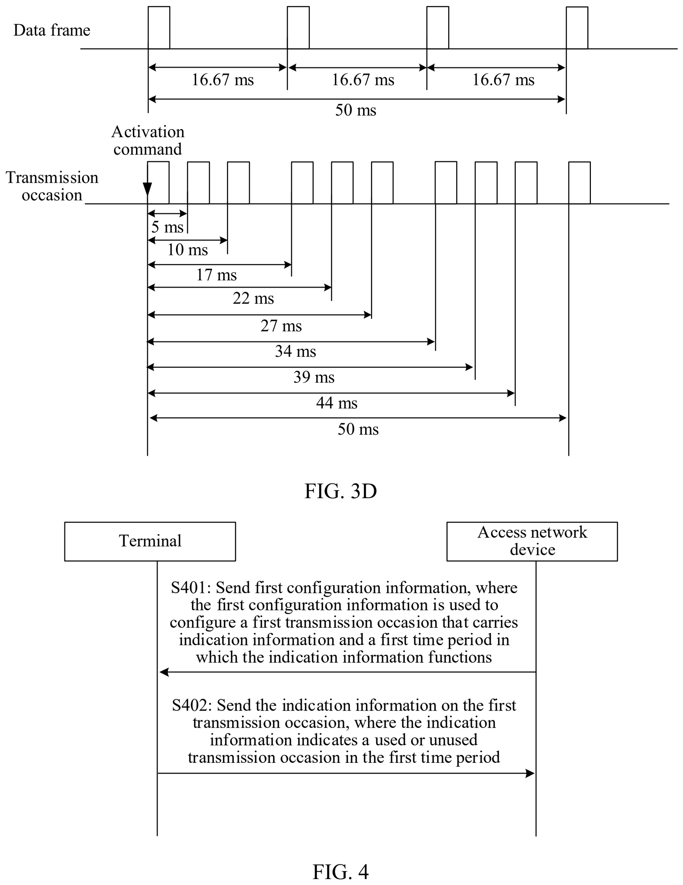

The access network device may configure a CG cycle and a TDRA table (table) for the terminal. Each row in the TDRA table may include one or more K2s (and SLIVs). For example, if the frame rate of the data frame is 60 FPS (that is, the transmission cycle of the data frame is approximately 16.67 ms), the CG cycle may be configured to 50 ms, and a TDRA row selected in the activation command includes a plurality of K2s. For example, as shown in FIG. 3D, the plurality of K2s are [0 5 10 17 22 27 34 39 44], indicating that start positions of a plurality of transmission occasions are respectively 0 ms, 5 ms, 10 ms, 17 ms, 22 ms, 27 ms, 34 ms, 39 ms and 44 ms in one CG cycle time period (50 ms).

It can be learned from the descriptions of the foregoing related technical feature that the access network device may configure a plurality of transmission occasions to perform transmission of one data frame. If a data amount that can be carried on the plurality of transmission occasions is less than a data amount of the data frame, remaining data of the data frame needs to be dynamically scheduled, which introduces an additional transmission delay. To reduce a transmission delay, in a possible manner, the access network device estimates a maximum data amount of the data frame, and configures the plurality of transmission occasions based on the estimated maximum data amount of the data frame. In this case, when a data amount of an actually transmitted data frame is small, some transmission occasions in the plurality of transmission occasions may be not used, causing a waste of transmission resources.

Based on this, an embodiment of this application provides a communication method, to enable a terminal to notify an access network device of an unused transmission occasion, so that the access network device allocates an unused resource to another terminal, improving resource utilization.

FIG. 4 is a schematic flowchart corresponding to a communication method according to an embodiment of this application. In FIG. 4, an example in which a terminal and an access network device are used as execution entities of an interaction illustration is used for illustrating the method. However, the execution entities of the interaction illustration are not limited in this application. For example, the terminal in FIG. 4 may alternatively be a module used in the terminal, for example, a chip, a chip system, or a processor, or may be a logical node, a logical module, or software that can implement all or some functions of the terminal. The access network device in FIG. 4 may alternatively be a module used in the access network device, for example, a chip, a chip system, or a processor, or may be a logical node, a logical module, or software that can implement all or some functions of the access network device.

As shown in FIG. 4, the method includes the following steps:
**S401:** The access network device sends first configuration information to the terminal, where the first configuration information is used to configure a first transmission occasion that carries indication information and a first time period in which the indication information functions, and the indication information indicates a used or unused transmission occasion in the first time period.

For example, the first transmission occasion may be located in the first time period, or the first transmission occasion may be located outside the first time period. When the first transmission occasion is located in the first time period, the used or unused transmission occasion in the first time period may not include the first transmission occasion. In other words, the first transmission occasion may be a used transmission occasion by default. In addition, the first transmission occasion may be located before the used or unused transmission occasion in the first time period.

There are a plurality of implementations in which the first transmission occasion and the first time period are configured by using the first configuration information, for example, an implementation 1 and an implementation 2.

### (1) Implementation 1

In the implementation 1, the access network device may send second configuration information to the terminal, where the second configuration information is used to configure a plurality of transmission occasions. The plurality of transmission occasions may correspond to a same CG, that is, the plurality of transmission occasions belong to a same set of transmission occasions and correspond to a same CG index; or the plurality of transmission occasions may correspond to different CGs, that is, the plurality of transmission occasions belong to different sets of transmission occasions and correspond to two or more CG indexes. For a specific configuration manner, refer to the foregoing (for example, Configuration manner 1A to Configuration manner 3A, or Configuration manner 1B to Configuration manner 3B). This is not limited in this embodiment of this application. In addition, the access network device may further send the first configuration information to the terminal, where the first configuration information is used to configure the first transmission occasion and the first time period.

In other words, the access network device may configure a plurality of transmission occasions for the terminal in the configuration manner described above, and additionally configure, for the terminal by using the first configuration information, which transmission occasion (or transmission occasions) in the plurality of transmission occasions as the first transmission occasion and the first time period in which the indication information functions. The first configuration information and the second configuration information may be carried in a same message, or may be carried in different messages.

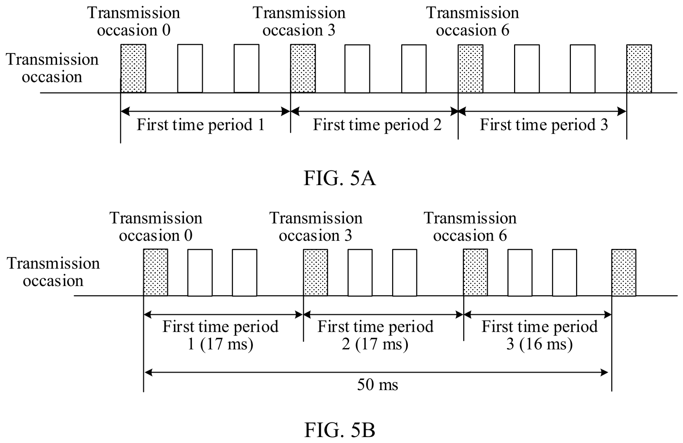

**(1.1)** For example, the first configuration information includes a time length of the first time period, and the first time period may appear periodically, as shown by a first time period 1, a first time period 2, and a first time period 3 in FIG. 5A. For example, a start position of a 1^{st} first time period may be a start position of a 1^{st} transmission occasion in the plurality of transmission occasions configured by the access network device for the terminal.

Optionally, the first configuration information further includes information 1. The information 1 indicates which transmission occasion in the first time period is the first transmission occasion. For example, the information 1 indicates that a 1^{st} transmission occasion in the first time period is the first transmission occasion, or indicates that another transmission occasion in the first time period is the first transmission occasion. Alternatively, the first configuration information may not include the information 1. A protocol may predefine which transmission occasion in the first time period is the first transmission occasion, or the access network device and the terminal pre-agree on which transmission occasion in the first time period is the first transmission occasion.

An example in which a 1^{st} transmission occasion in the first time period is a first transmission occasion is used. As shown in FIG. 5A, the terminal may send indication information 1 on a transmission occasion 0, where the indication information 1 indicates a used or unused transmission occasion in the first time period 1; the terminal may send indication information 2 on a transmission occasion 3, where the indication information 2 indicates a used or unused transmission occasion in the first time period 2; and so on. A time length of each first time period (for example, the first time period 1, the second time period 2, and the first time period 3 in FIG. 5A) is equal to the time length of the first time period configured by the access network device.

**(1.2)** For another example, the first configuration information includes a circulating cycle and a plurality of offsets a. For example, if the circulating cycle is 50 ms, and the plurality of offsets a are [0 17 34] respectively, it indicates that a range between two adjacent offsets a is the first time period. That is, one circulating cycle includes three first time periods, which are respectively 0 ms to 17 ms, 17 ms to 34 ms, and 34 ms to 50 ms. For another example, if the circulating cycle is 50 ms, and the plurality of offsets a are [0 22 39] respectively, it indicates that a range between two adjacent offsets a is the first time period. That is, one circulating cycle includes three first time periods, which are respectively 0 ms to 22 ms, 22 ms to 39 ms, and 39 ms to 50 ms.

Optionally, the first configuration information further includes information 1. The information 1 indicates which transmission occasion in the first time period is a first transmission occasion. For example, the information 1 indicates that a 1^{st} transmission occasion in the first time period is a first transmission occasion.

In this case, an example in which the circulating cycle is 50 ms and the plurality of offsets a are [0 17 34] respectively is used. As shown in FIG. 5B, the terminal may send indication information 1 on a transmission occasion 0, where the indication information 1 indicates a used or unused transmission occasion in a first time period 1; the terminal may send indication information 2 on a transmission occasion 3, where the indication information 2 indicates a used or unused transmission occasion in a first time period 2; and so on. Time lengths of different first time periods in one circulating cycle may be different. For example, in FIG. 5B, a time length of the first time period 1 is 17 ms, a time length of the first time period 2 is 17 ms, and a time length of a first time period 3 is 16 ms.

Alternatively, the first configuration information includes a circulating cycle and a plurality of offsets b, and the plurality of offsets b are [0 5 10 17 22 27 34 39 44] respectively. Further, the first configuration information further includes offset group (offset group) information. The offset group information indicates which offsets b are one group. For example, the offset group information indicates that [0 5 10] is a first group, [17 22 27] is a second group, and [34 39 44] is a third group, indicating that a range between two adjacent groups is the first time period. That is, one circulating cycle includes three first time periods, which are respectively 0 ms to 17 ms, 17 ms to 34 ms, and 34 ms to 50 ms.

**(1.3)** For another example, the first configuration information includes a circulating cycle and a plurality of cycle values. For example, if the circulating cycle is 50 ms, and the plurality of cycle values are [17 17 16] respectively, it indicates that one circulating cycle includes three small cycle time periods, which are respectively 0 ms to 17 ms, 17 ms to 34 ms, and 34 ms to 50 ms. Each small cycle time period is one first time period. Optionally, the first configuration information further includes information 1. The information 1 indicates which transmission occasion in the first time period is a first transmission occasion. For example, the information 1 indicates that a 1^{st} transmission occasion in the first time period is a first transmission occasion. In this case, refer to the descriptions of FIG. 5B.

For another example, if the circulating cycle is 50 ms, and the plurality of cycle values are [22 17 11] respectively, it indicates that one circulating cycle includes three small cycle time periods, which are respectively 0 ms to 22 ms, 22 ms to 39 ms, and 39 ms to 50 ms. Each small cycle time period is one first time period.

**(1.4)** For another example, the plurality of transmission occasions configured by using the second configuration information correspond to a plurality of CG indexes, and the first configuration information may configure a transmission occasion corresponding to at least one CG index in the plurality of CG indexes as the first transmission occasion. For example, the first configuration information includes at least one CG index.

Further, in an example, the first configuration information may further configure a time period between two adjacent first transmission occasions as the first time period. The time period between two adjacent first transmission occasions may be a time period between a start position of a former transmission occasion and a start position of a latter transmission occasion, and in this case, the first transmission occasion is located in the first time period. Alternatively, the time period between two adjacent first transmission occasions may be a time period between an end position of a former transmission occasion and a start position of a latter transmission occasion, and in this case, the first transmission occasion is located outside the first time period.

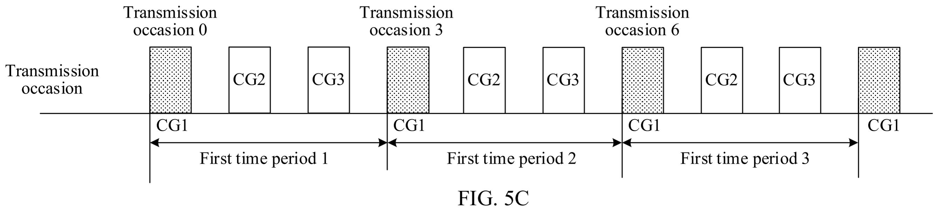

In this case, as shown in FIG. 5C, the plurality of CG indexes corresponding to the plurality of transmission occasions configured by using the second configuration information are CG1, CG2, and CG3. If the first configuration information configures a transmission occasion corresponding to CG1 as the first transmission occasion, the terminal may send indication information 1 on a transmission occasion 0, where the indication information 1 indicates a used or unused transmission occasion in a first time period 1; the terminal may send indication information 2 on a transmission occasion 3, where the indication information 2 indicates a used or unused transmission occasion in a first time period 2; and so on.

In another example, the first configuration information may further configure duration (duration). In this case, a start position of the first time period may be a start position of the first transmission occasion, or may be a position obtained by offsetting the start position of the first transmission occasion is by a first offset (refer to the following), and a time length of the first time period is the duration.

In addition, in the implementation 1, the first configuration information and the second configuration information may be associated with each other (or the indication information and the plurality of transmission occasions may be associated with each other). There are a plurality of specific association manners. **For example,** the first configuration information includes the CG indexes corresponding to the plurality of transmission occasions configured by using the second configuration information. In this case, the first configuration information and the second configuration information may be carried in a same message, or may be carried in different messages. **For another example,** if the plurality of transmission occasions configured by using the second configuration information belong to a set of transmission occasions, both the first configuration information and the second configuration information may be carried in a CG-Config field corresponding to the set of transmission occasions. **For another example,** if the access network device configures a plurality of sets of transmission occasions for the terminal by using the second configuration information (that is, the second configuration information includes configuration information of the plurality of sets of transmission occasions), one piece of additional information (referred to as information 2) may be added to the configuration information of each set of transmission occasions in the plurality of sets of transmission occasions. The information 2 indicates that the set of transmission occasions are associated with the indication information. **For another example,** if the access network device configures a plurality of sets of transmission occasions for the terminal by using the second configuration information, one piece of additional information (referred to as information 3) may be added to the configuration information of each set of transmission occasions in the plurality of sets of transmission occasions. The information 3 indicates indication information carried on which transmission occasions is associated with the set of transmission occasions.

### (2) Implementation 2

In the implementation 2, the first configuration information is used to configure a plurality of transmission occasions, the plurality of transmission occasions belong to a same set of transmission occasions, a CG cycle time period corresponding to the plurality of transmission occasions includes the first time period, and the transmission occasions in the CG cycle time period include a first transmission occasion. In other words, the access network device may implicitly configure, by configuring a plurality of transmission occasions for the terminal, which transmission occasion (or transmission occasions) in the plurality of transmission occasions as the first transmission occasion, and indicate the first time period in which the indication information functions.

**(2.1)** For example, the first configuration information includes a CG cycle and a cycle list. For example, the CG cycle may be configured to 50 ms, and the cycle list may be configured to [17 17 16], that is, cycle(0)=17 ms, cycle(1)=17 ms, and cycle(2)=16 ms. Therefore, the 50 ms CG cycle time period includes three small cycle time periods: 0 ms to 17 ms, 17 ms to 34 ms, and 34 ms to 50 ms.

In this case, the terminal may determine, based on the first configuration information, that each small cycle time period in the CG cycle time period is one first time period. Optionally, the first configuration information further includes information 1, and the information 1 indicates which transmission occasion in the first time period is a first transmission occasion. Alternatively, the first configuration information does not include the information 1. In this case, a protocol may predefine which transmission occasion in the first time period is a first transmission occasion, or the access network device and the terminal pre-agree on which transmission occasion in the first time period is a first transmission occasion. For details, refer to the descriptions of FIG. 5B.

**(2.2)** For another example, the first configuration information includes a CG cycle and an offset list. For example, the CG cycle may be configured to 50 ms, and the offset list may be configured to [0 17 34], that is, offset(0)=0 ms, offset(1)=17 ms, and offset(2)=34 ms. Therefore, the 50 ms CG cycle time period includes three small cycle time periods: 0 ms to 17 ms, 17 ms to 34 ms, and 34 ms to 50 ms.

In this case, the terminal may determine, based on the first configuration information, that each small cycle time period in the CG cycle time period is one first time period. Optionally, the first configuration information further includes information 1, and the information 1 indicates which transmission occasion in the first time period is a first transmission occasion. Alternatively, the first configuration information does not include the information 1. In this case, a protocol may predefine which transmission occasion in the first time period is a first transmission occasion, or the access network device and the terminal pre-agree on which transmission occasion in the first time period is a first transmission occasion. For details, refer to the descriptions of FIG. 5B.

**(2.3)** For another example, the first configuration information includes a CG cycle and a plurality of K2s. For example, if the plurality of K2s are [0 5 10 17 22 27 34 39 44], it indicates that start positions of the plurality of transmission occasions in one CG cycle time period (50 ms) are respectively 0 ms, 5 ms, 10 ms, 17 ms, 22 ms, 27 ms, 34 ms, 39 ms and 44 ms. Further, the first configuration information may further include group information. For example, if the group information indicates that every three K2s form one group, it indicates that one CG cycle time period includes three small cycle time periods: 0 ms to 17 ms, 17 ms to 34 ms, and 34 ms to 50 ms. It may be understood that the group information may alternatively be predefined in a protocol, or may be pre-agreed on by the access network device and the terminal.

In this case, the terminal may determine, based on the first configuration information, that each small cycle time period in the CG cycle time period is one first time period. Optionally, the first configuration information further includes information 1, and the information 1 indicates which transmission occasion in the first time period is a first transmission occasion. Alternatively, the first configuration information does not include the information 1. In this case, a protocol may predefine which transmission occasion in the first time period is a first transmission occasion, or the access network device and the terminal pre-agree on which transmission occasion in the first time period is a first transmission occasion. For details, refer to the descriptions of FIG. 5B.

It may be understood that the first configuration information may be carried in a plurality of types of possible signaling. For example, the first configuration information may be carried in physical layer signaling like DCI, or higher layer signaling like a MAC CE or RRC signaling, or may be a combination of different signaling. For example, a candidate set (each candidate item in the candidate set is used to configure a first transmission occasion and a first time period) is configured by using the MAC CE or the RRC signaling, and the DCI indicates a candidate item in the candidate set. In this way, the terminal may determine the first transmission occasion and the first time period based on the candidate item. Alternatively, a candidate set is configured by using the RRC signaling, and the MAC CE indicates a candidate item in the set; or the RRC signaling is used to configure a set of candidate sets, the MAC CE indicates a specific candidate set, and the DCI indicates a specific candidate item in the candidate set.

**S402:** The terminal sends the indication information on the first transmission occasion; and correspondingly, the access network device receives the indication information on the first transmission occasion.

For example, the terminal may further send data on the first transmission occasion. In other words, the first transmission occasion may carry the indication information and the data. In addition, optionally, after receiving the indication information on the first transmission occasion, the access network device may feed back acknowledgment information to the terminal. The acknowledgment information indicates that the access network device has received the indication information.

The terminal may send the indication information to the access network device on the first transmission occasion in a plurality of manners. For example, the terminal may send uplink control information (uplink control information, UCI), CG-UCI, or a medium access control (media access control, MAC) control element (control element, CE) to the access network device, where the UCI, the CG-UCI, or the MAC CE includes the indication information.

As described above, the indication information indicates a used or unused transmission occasion in the first time period. There may be a plurality of specific indication manners, for example, an indication manner 1, an indication manner 2, and an indication manner 3.

### (1) Indication manner 1

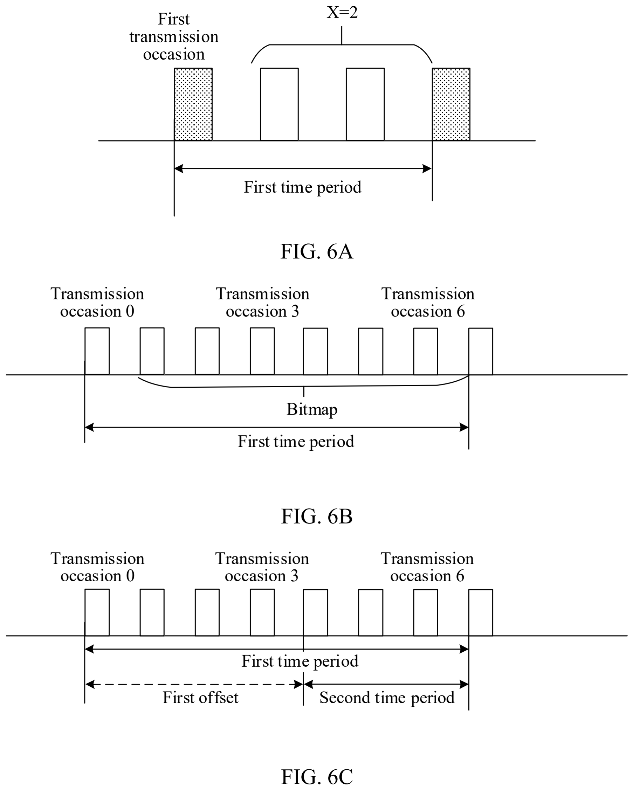

The indication information indicates a quantity of unused transmission occasions in the first time period. In this case, the unused transmission occasions in the first time period are consecutive transmission occasions, and are in a rear part of the first time period. For example, if the indication information indicates that the quantity of unused transmission occasions in the first time period is X, the unused transmission occasions in the first time period are X transmission occasions prior to a last transmission occasion in the first time period. As shown in FIG. 6A, if X=2, it indicates that last two transmission occasions in the first time period are unused transmission occasions.

### (2) Indication manner 2

The indication information includes a bitmap, and the bitmap indicates one or more used or unused CG transmission occasions in the first time period. For example, one bit in the bitmap corresponds to one or more transmission occasions, and a value of the bit indicates whether the transmission occasion corresponding to the bit is used. For example, if the value of the bit is "0", it indicates that the transmission occasion corresponding to the bit is unused, and if the value of the bit is "1", it indicates that the transmission occasion corresponding to the bit is used, or vice versa.

For example, the bitmap includes M bits, and the M bits correspond to N transmission occasions. A possible correspondence method is as follows: An i^{th} (i=1, 2, ..., M) bit in the bitmap corresponds to an ((i-1)*int(N/M)+1)^{th} transmission occasion to an (i*int(N/M))^{th} transmission occasion; or an i^{th} (i=1, 2, ..., M) bit in the bitmap corresponds to an ((M-i+1)*int(N/M))^{th} transmission occasion to an ((M-i)*int(N/M)+1)^{th} transmission occasion. int is a rounding symbol, and may indicate rounding down.

In this case, a bit width of the bitmap (that is, a quantity of bits included in the bitmap) depends on a quantity of transmission occasions in the first time period. An example in which one bit in the bitmap corresponds to one transmission occasion is used. If the first transmission occasion is located outside the first time period, the bit width of the bitmap is equal to the quantity of transmission occasions in the first time period. If the first transmission occasion is located in the first time period, the bit width of the bitmap is equal to a quantity of transmission occasions other than the first transmission occasion in the first time period.

For example, as shown in FIG. 6B, the first time period includes seven transmission occasions (that is, a transmission occasion 0 to a transmission occasion 6), and the transmission occasion 0 is the first transmission occasion. In this case, the bitmap may indicate whether the transmission occasion 1 to the transmission occasion 6 are used or unused.

If one bit in the bitmap corresponds to one transmission occasion, the bitmap may include six bits. For example, a 1^{st} bit in the six bits corresponds to a last transmission occasion (that is, the transmission occasion 6) in the first time period, a 2^{nd} bit corresponds to a last-but-one transmission occasion (that is, the transmission occasion 5) in the first time period, and so on. Therefore, if a value of the bitmap is 000000, it indicates that the transmission occasion 1 to the transmission occasion 6 are all unused transmission occasions. If the value of the bitmap is 000011, it indicates that the transmission occasion 3 to the transmission occasion 6 are all unused transmission occasions, and the transmission occasion 1 and the transmission occasion 2 are used transmission occasions. For other values of the bitmap, refer to the processing, and details are not listed one by one.

If one bit in the bitmap corresponds to a plurality of transmission occasions, for example, one bit corresponds to two transmission occasions, the bitmap may include three bits. For example, a 1^{st} bit in the three bits corresponds to last two transmission occasions (that is, the transmission occasion 5 and the transmission occasion 6) in the first time period, and a 2^{nd} bit corresponds to a last-but-two and a last-but-three transmission occasions (that is, the transmission occasion 3 and the transmission occasion 4) in the first time period, and a 3^{rd} bit corresponds to a last and a last-but-one transmission occasions (that is, the transmission occasion 1 and the transmission occasion 2) in the first time period. Therefore, if a value of the bitmap is 000, it indicates that the transmission occasion 1 to the transmission occasion 6 are all unused transmission occasions. If the value of the bitmap is 001, it indicates that the transmission occasion 3 to the transmission occasion 6 are all unused transmission occasions, and the transmission occasion 1 and the transmission occasion 2 are used transmission occasions. For other values of the bitmap, refer to the processing, and details are not listed one by one.

In addition, when one bit in the bitmap corresponds to a plurality of transmission occasions, quantities of transmission occasions corresponding to different bits may be the same or may be different. The transmission occasion corresponding to each bit in the bitmap may be predefined in a protocol, or may be configured by the access network device for the terminal. For example, the access network device may configure a plurality of transmission occasion groups for the terminal, and each bit in the bitmap may correspond to one transmission occasion group. Each transmission occasion group in the plurality of transmission occasion groups may include one or more transmission occasions, and quantities of transmission occasions included in different transmission occasion groups may be the same or may be different.

### (3) Indication manner 3

The indication information indicates a second time period, the first time period includes the second time period, and the used or unused CG transmission occasion in the first time period is located in the second time period.

For example, the indication information may include a first offset, and the first offset is used to determine the second time period. Specifically, the first offset is used to determine a start position of the second time period, and an end position of the second time period is the same as an end position of the first time period. For example, a unit of the first offset may be a time unit (for example, ms), and the start position of the second time period is determined by offsetting the start position of the first time period backward by the first offset. For another example, a unit of the first offset may be a quantity of transmission occasions. Assuming that the first offset is P transmission occasions, a start position of a (P+1)^{th} transmission occasion in the first time period is the start position of the second time period.

It may be understood that the first offset may be flexibly determined by the terminal, and first offsets borne in indication information sent on different first transmission occasions may be the same or may be different. Alternatively, the first offset may be configured by the access network device for the terminal. In this case, the indication information may not need to include the first offset.

In a possible implementation, all transmission occasions in the second time period may be unused transmission occasions by default. In other words, an unused transmission occasion in the first time period may be indicated by using only the first offset.

In still another possible implementation, the indication information may further include a bitmap, and one bit in the bitmap indicates one or more used or unused transmission occasions. In other words, a used or unused transmission occasion in the second time period may be indicated by using the first offset and the bitmap. In this case, a bit width of the bitmap (that is, a quantity of bits included in the bitmap) depends on a quantity of transmission occasions in the second time period. For example, if one bit in the bitmap corresponds to one transmission occasion, the bit width of the bitmap is equal to the quantity of transmission occasions in the first time period.

For example, as shown in FIG. 6C, the first time period includes seven transmission occasions (that is, a transmission occasion 0 to a transmission occasion 6), and the transmission occasion 0 is the first transmission occasion. If the first offset is three transmission occasions (for example, the first offset is "11", indicating three transmission occasions), the start position of the second time period is a start position of the transmission occasion 3.

If one bit in the bitmap corresponds to one transmission occasion, the bitmap may include four bits. For example, a 1^{st} bit in the four bits corresponds to a last transmission occasion (that is, the transmission occasion 6) in the second time period, a 2^{nd} bit corresponds to a last-but-one transmission occasion (that is, the transmission occasion 5) in the second time period, and a 3^{rd} bit corresponds to a last-but-two transmission occasion (that is, the transmission occasion 4) in the second time period, a 4^{th} bit corresponds to a last-but-three transmission occasion (that is, the transmission occasion 3) in the second time period. Therefore, if a value of the bitmap is 0000, it indicates that the transmission occasion 3 to the transmission occasion 6 are all unused transmission occasions. If the value of the bitmap is 0011, it indicates that the transmission occasion 6 and the transmission occasion 5 are unused transmission occasions, and the transmission occasion 4 and the transmission occasion 3 are used transmission occasions. For other values of the bitmap, refer to the processing, and details are not listed one by one.

If one bit in the bitmap corresponds to a plurality of transmission occasions, for example, one bit corresponds to two transmission occasions, the bitmap may include two bits. For example, a 1^{st} bit in the two bits corresponds to last two transmission occasions (that is, the transmission occasion 5 and the transmission occasion 6) in the second time period, and a 2^{nd} bit corresponds to a last-but-two and a last-but-three transmission occasions (that is, the transmission occasion 3 and the transmission occasion 4) in the second time period. Therefore, if a value of the bitmap is 00, it indicates that the transmission occasion 3 to the transmission occasion 6 are all unused transmission occasions. If the value of the bitmap is 01, it indicates that the transmission occasion 6 and the transmission occasion 5 are unused transmission occasions, and the transmission occasion 4 and the transmission occasion 3 are used transmission occasions. For other values of the bitmap, refer to the processing, and details are not listed one by one. In addition, when one bit in the bitmap corresponds to a plurality of transmission occasions, quantities of transmission occasions corresponding to different bits may be the same or may be different. The transmission occasion corresponding to each bit may be predefined in a protocol, or may be configured by the access network device for the terminal. This is not specifically limited.

Generally, after receiving the indication information on the first transmission occasion, the access network device needs specific processing time to parse out content of the indication information. If an unused transmission occasion indicated by the indication information includes a next transmission occasion of the first transmission occasion, because a time interval between the next transmission occasion of the first transmission occasion and the first transmission occasion is short (for example, less than the processing time of the access network device), after parsing out the indication information, there is no time for the access network device to schedule the next transmission occasion to another terminal. Therefore, in the indication manner 3, the indication information may include the first offset. Effective time (that is, start time of the second time period) of the indication information may be delayed, to reserve sufficient processing time for the access network device, so that the access network device schedules the unused transmission occasion to another terminal. In addition, transmission resources are saved (for example, in the indication manner 3, if the first offset includes seven transmission occasions, the first offset may be "111", and only three bits are needed; or if the first offset is not set, assuming that one bit in the bitmap corresponds to one transmission occasion, another six bits need to be added to the bitmap).

It may be understood that, in the indication manner 2 and the indication manner 3, the bit width of the bitmap is determined based on the quantity of transmission occasions in the first time period (or the second time period). In another possible implementation, the bit width of the bitmap may alternatively be configured by the access network device for the terminal. For example, the indication information includes a bitmap (optionally, further includes a first offset), and the first configuration information is used to configure a bit width of the bitmap (optionally, the first configuration information is further used to configure a first transmission occasion). In this case, a time period that the transmission occasion corresponding to the bitmap is in is the first time period. In other words, the first time period is determined by the bit width of the bitmap.

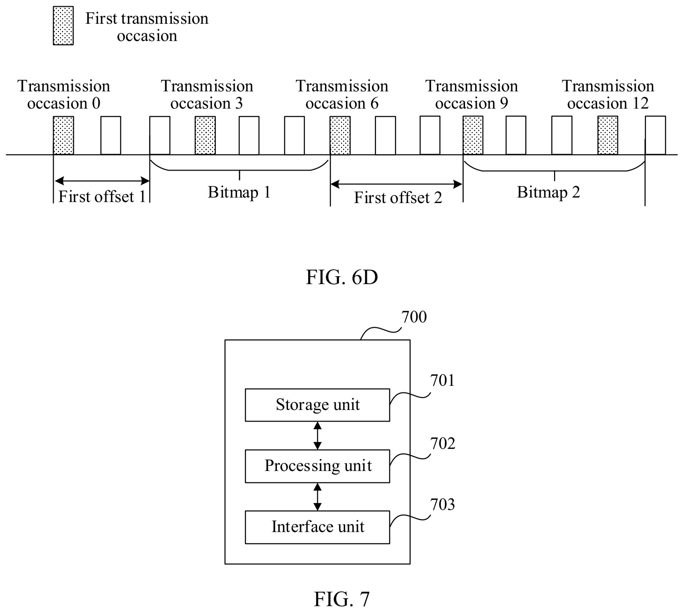

For example, the first configuration information configures the bit width of the bitmap to 4. An example in which one bit in the bitmap corresponds to one transmission occasion is used. As shown in FIG. 6D, the terminal may send indication information 1 on a transmission occasion 0, where the indication information 1 includes a first offset 1 and a bitmap 1 (for example, the bitmap 1 is "1000", indicating that a transmission occasion 2 is used, and a transmission occasion 3 to a transmission occasion 5 are unused), and a time period that the transmission occasion 2 to the transmission occasion 5 are in may be understood as a first time period 1. In addition, the terminal may send indication information 2 on a transmission occasion 6, where the indication information 2 includes a first offset 2 and a bitmap 2 (for example, the bitmap 2 is "1100", indicating that a transmission occasion 9 and a transmission occasion 10 are used, and a transmission occasion 11 and a transmission occasion 12 are unused), and a time period that the transmission occasion 9 to the transmission occasion 12 are in may be understood as a first time period 2.

It may be understood that, after the access network device configures, for the terminal by using the first configuration information, transmission occasions that carry indication information, the terminal may send the indication information on all these transmission occasions, or may send the indication information on some transmission occasions in these transmission occasions. For example, in the case shown in FIG. 6D, all of the transmission occasion 0, the transmission occasion 3, the transmission occasion 6, the transmission occasion 9, and the transmission occasion 12 may carry indication information, and the terminal sends the indication information only on the transmission occasion 0 and the transmission occasion 6.

According to the foregoing method, the terminal may send the indication information to the access network device on the first transmission occasion based on first configuration information, to notify the access network device of an unused transmission occasion, so that the access network device allocates an unused resource to another terminal, improving resource utilization. In addition, because the access network device uniformly configures, by using the first configuration information, a first transmission occasion and the first time period in which the indication information functions. Therefore, when the terminal sends the indication information, there is no need to additionally indicate the first time period in which the indication information functions, reducing signaling overheads.

The foregoing mainly describes the solutions provided in embodiments of this application from a perspective of interaction between communication apparatuses. It may be understood that, to implement the foregoing functions, the access network device and the terminal may include corresponding hardware structures and/or software modules for implementing the functions. A person skilled in the art should be easily aware that, in combination with units and algorithm steps of the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the access network device and the terminal based on the foregoing method examples. For example, each functional unit may be obtained through division based on each corresponding function, or two or more functions may be integrated into one unit. The integrated unit may be implemented in a form of hardware, or may be implemented in a form of a software functional unit.

FIG. 7 is a block diagram of a possible example of an apparatus according to an embodiment of this application. As shown in FIG. 7, the apparatus 700 may include a processing unit 702 and an interface unit 703. The processing unit 702 is configured to control and manage an action of the apparatus 700. The interface unit 703 is configured to support communication between the apparatus 700 and another device. Optionally, the interface unit 703 is also referred to as a transceiver unit, and may include a receiving unit and/or a sending unit, respectively configured to perform a receiving operation and a sending operation. The apparatus 700 may further include a storage unit 701, configured to store program code and/or data of the apparatus 700.

The apparatus 700 may be the terminal in the foregoing embodiments, or may be a component (for example, a circuit or a chip) arranged in the terminal. The processing unit 702 may support the apparatus 700 in performing actions of the terminal in the foregoing method examples. Alternatively, the processing unit 702 mainly performs internal actions of the terminal in the method examples, and the interface unit 703 may support communication between the apparatus 700 and another device.

For example, in an embodiment, the interface unit 703 is configured to: receive configuration information, where the configuration information is used to configure a first CG transmission occasion that carries indication information and a first time period in which the indication information functions, and the indication information indicates a used or unused CG transmission occasion in the first time period; and send the indication information on the first CG transmission occasion.

The apparatus 700 may be the access network device in the foregoing embodiments, or may be a component (for example, a circuit or a chip) arranged in the access network device. The processing unit 702 may support the apparatus 700 in performing actions of the access network device in the foregoing method examples. Alternatively, the processing unit 702 mainly performs internal actions of the access network device in the method examples, and the interface unit 703 may support communication between the apparatus 700 and another device.

In an embodiment, the interface unit 703 is configured to: send configuration information, where the configuration information is used to configure a first CG transmission occasion that carries indication information and a first time period in which the indication information functions, and the indication information indicates a used or unused CG transmission occasion in the first time period; and receive the indication information on the first CG transmission occasion.

It should be understood that division into the units in the foregoing apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element, or may be implemented in a form of software invoked by a processing element.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

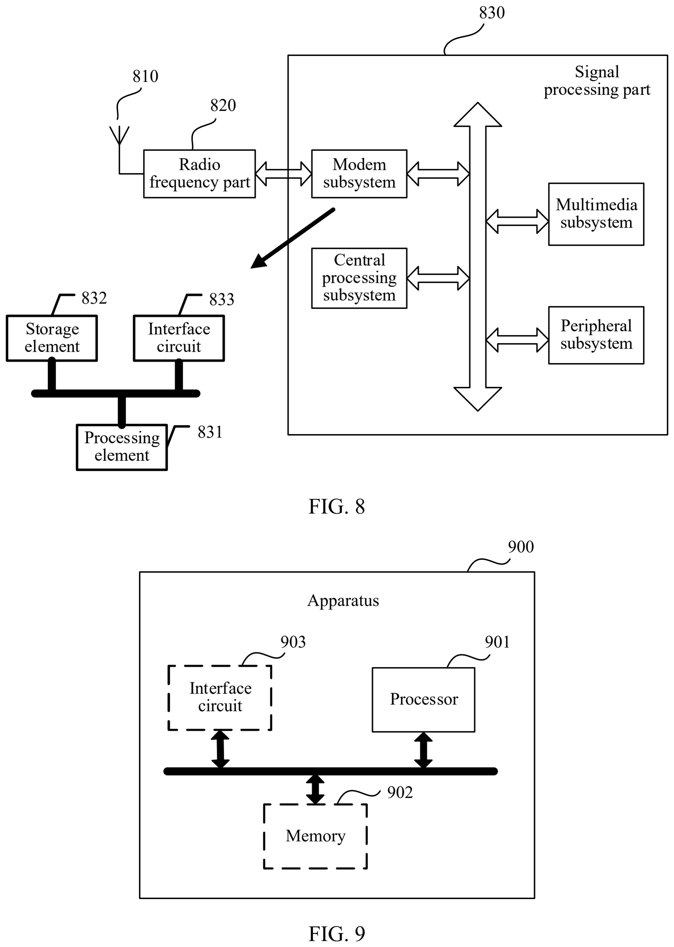

FIG. 8 is a diagram of a structure of a terminal according to an embodiment of this application, to implement operations of the terminal in the foregoing embodiments. As shown in FIG. 8, the terminal includes an antenna 810, a radio frequency part 820, and a signal processing part 830. The antenna 810 is connected to the radio frequency part 820. In a downlink direction, the radio frequency part 820 receives, through the antenna 810, information sent by a network device, and sends, to the signal processing part 830, the information sent by the network device for processing. In an uplink direction, the signal processing part 830 processes information of the terminal and sends the processed information to the radio frequency part 820, and the radio frequency part 820 processes the information of the terminal and then sends the processed information to the network device by using the antenna 810.

The signal processing part 830 may include a modem subsystem, configured to process data at each communication protocol layer. The signal processing part may further include a central processing subsystem, configured to implement processing of an operating system and an application layer of the terminal. In addition, the signal processing part may further include another subsystem, for example, a multimedia subsystem or a peripheral subsystem. The multimedia subsystem is configured to control a camera or a screen display of the terminal, and the peripheral subsystem is configured to implement a connection to another device. The modem subsystem may be a chip that is separately arranged.

The modem subsystem may include one or more processing elements 831, for example, include a main control CPU and another integrated circuit. In addition, the modem subsystem may further include a storage element 832 and an interface circuit 833. The storage element 832 is configured to store data and a program. However, the program used to perform the method performed by the terminal in the foregoing methods may not be stored in the storage element 832, but is stored in a memory outside the modem subsystem, and is loaded and used by the modem subsystem when to be used. The interface circuit 833 is configured to communicate with another subsystem.

The modem subsystem may be implemented by using a chip. The chip includes at least one processing element and an interface circuit. The processing element is configured to perform the steps of any method performed by the terminal. The interface circuit is configured to communicate with another apparatus. In an implementation, units in the terminal for implementing the steps in the foregoing methods may be implemented in a form in which a processing element schedules a program. For example, the apparatus used in the terminal includes a processing element and a storage element. The processing element invokes a program stored in the storage element, to perform the method performed by the terminal in the foregoing method embodiments. The storage element may be a storage element that is located on a same chip as the processing element, that is, an on-chip storage element.

In another implementation, the program used to perform the method performed by the terminal in the foregoing methods may be in a storage element located on a different chip from the processing element, namely, an off-chip storage element. In this case, the processing element invokes or loads the program from the off-chip storage element to an on-chip storage element, to invoke and perform the method performed by the terminal in the foregoing method embodiments.

In still another implementation, units in the terminal for implementing the steps in the foregoing methods may be configured as one or more processing elements. These processing elements are arranged on the modem subsystem. The processing element herein may be an integrated circuit, for example, one or more ASICs, one or more DSPs, one or more FPGAs, or a combination of these types of integrated circuits. These integrated circuits may be integrated together to form a chip.

The units in the terminal for implementing the steps in the foregoing methods may be integrated together and implemented in a form of an SoC, and the SoC chip is configured to implement the foregoing methods. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented in a form in which the processing element invokes a program, and functions of some units may be implemented by the integrated circuit.

It can be learned that the foregoing apparatus used in the terminal may include at least one processing element and an interface circuit. The at least one processing element is configured to perform any method performed by the terminal in the foregoing method embodiments. The processing element may perform some or all steps performed by the terminal in a first manner, that is, by invoking a program stored in the storage element; or may perform some or all steps performed by the terminal in a second manner, that is, by combining instructions and a hardware integrated logic circuit in the processor element. Certainly, some or all steps performed by the terminal may alternatively be performed by combining the first manner and the second manner.

The processing element herein is the same as that described above, and may be implemented by using a processor. A function of the processing element may be the same as a function of the processing unit described in FIG. 7. For example, the processing element may be a general-purpose processor, for example, a CPU; or may be one or more integrated circuits configured to implement the foregoing methods, for example, one or more ASICs, one or more microprocessors DSPs, one or more FPGAs, or a combination of at least two of these forms of integrated circuits. The storage element may be implemented by using a memory, and a function of the storage element may be the same as a function of the storage unit described in FIG. 7. The storage element may be one memory, or may be a general name of a plurality of memories.

The terminal shown in FIG. 8 can implement processes related to the terminal in the foregoing method embodiments. Operations and/or functions of modules in the terminal shown in FIG. 8 are respectively intended to implement corresponding procedures in the foregoing method embodiments. For details, refer to the descriptions in the foregoing method embodiments. To avoid repetition, detailed descriptions are properly omitted herein.

FIG. 9 is a diagram of a structure of an apparatus according to an embodiment of this application. The apparatus 900 may be the access network device in the foregoing embodiments, and is configured to implement a function of the access network device in the foregoing embodiments.

As shown in FIG. 9, the apparatus 900 may include a processor 901, a memory 902, and an interface circuit 903. The processor 901 may be configured to: process a communication protocol and communication data, and control the apparatus 900. The memory 902 may be configured to store a program and data. The processor 901 may perform, based on the program, the method performed by the apparatus 900 in embodiments of this application. The interface circuit 903 may be used by the apparatus 900 to communicate with another device, and the communication may be wired communication or wireless communication.

Alternatively, the memory 902 may be externally connected to the apparatus 900. In this case, the apparatus 900 may include the interface circuit 903 and the processor 901. Alternatively, the interface circuit 903 may be externally connected to the apparatus 900. In this case, the apparatus 900 may include the memory 902 and the processor 901. When both the interface circuit 903 and the memory 902 are externally connected to the apparatus 900, the apparatus 900 may include the processor 901.

The apparatus 900 shown in FIG. 9 can implement processes related to the access network device in the foregoing method embodiments. Operations and/or functions of modules in the apparatus 900 shown in FIG. 9 are respectively intended to implement corresponding procedures in the foregoing method embodiments. For details, refer to the descriptions in the foregoing method embodiments. To avoid repetition, detailed descriptions are properly omitted herein.

An embodiment of this application further provides a communication system. The communication system may include a terminal and an access network device. The terminal is configured to perform the steps on the terminal side in the foregoing method embodiments, and the access network device is configured to perform the steps on the access network device side in the foregoing method embodiments.

The terms "system" and "network" may be used interchangeably in embodiments of this application. "At least one" means one or more, and "a plurality of" means two or more. "And/or" describes an association relationship of associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, a priority, or importance of the plurality of objects.

A person skilled in the art should understand that embodiments of this application may be provided as a method, a system, or a computer program product. Therefore, this application may use a form of hardware only embodiments, software only embodiments, or embodiments combining software and hardware. In addition, this application may use a form of a computer program product that is implemented on one or more computer-usable storage media (including but not limited to a magnetic disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. In this case, if the modifications and variations made to this application fall within the scope of the claims of this application and their equivalent technologies, this application is also intended to include the modifications and variations.

## Claims

1. A communication method, wherein the method comprises:
receiving configuration information, wherein the configuration information is used to configure a first CG transmission occasion that carries indication information, the indication information comprises a bitmap, the configuration information is further used to configure a bit width of the bitmap, one bit in the bitmap is used to indicate one or more used or unused CG transmission occasions in a first time period, and a time period that a CG transmission occasion corresponding to the bitmap is in is the first time period; and
sending the indication information on the first CG transmission occasion.

2. The method according to claim 1, wherein the configuration information is further used to configure a CG transmission occasion in a CG cycle time period, the CG transmission occasion in the CG cycle time period comprises the first CG transmission occasion, and the CG cycle time period comprises the first time period.

3. The method according to claim 1 or 2, wherein the first CG transmission occasion and a used or unused CG transmission occasion in the first time period correspond to a same CG or different CGs.

4. The method according to any one of claims 1 to 3, wherein the first CG transmission occasion is a 1^{st} CG transmission occasion in the first time period.

5. The method according to any one of claims 1 to 4, wherein the indication information indicates a second time period, and the first time period comprises the second time period; and
the used or unused CG transmission occasion in the first time period is located in the second time period.

6. A communication method, wherein the method comprises:
sending configuration information, wherein the configuration information is used to configure a first CG transmission occasion that carries indication information, the indication information comprises a bitmap, the configuration information is further used to configure a bit width of the bitmap, one bit in the bitmap is used to indicate one or more used or unused CG transmission occasions in a first time period, and a time period that a CG transmission occasion corresponding to the bitmap is in is the first time period; and
receiving the indication information on the first CG transmission occasion.

7. The method according to claim 6, wherein the configuration information is further used to configure a CG transmission occasion in a CG cycle time period, the CG transmission occasion in the CG cycle time period comprises the first CG transmission occasion, and the CG cycle time period comprises the first time period.

8. The method according to claim 6 or 7, wherein the first CG transmission occasion and a used or unused CG transmission occasion in the first time period correspond to a same CG or different CGs.

9. The method according to any one of claims 6 to 8, wherein the first CG transmission occasion is a 1^{st} CG transmission occasion in the first time period.

10. The method according to any one of claims 6 to 9, wherein the indication information indicates a second time period, and the first time period comprises the second time period; and
the used or unused CG transmission occasion in the first time period is located in the second time period.

11. A communication apparatus, comprising a processor, wherein the processor is coupled to a memory, the memory stores instructions, and the processor is configured to invoke the instructions in the memory, to enable the communication apparatus to perform the method according to any one of claims 1 to 5.

12. A communication apparatus, comprising a processor, wherein the processor is coupled to a memory, the memory stores instructions, and the processor is configured to invoke the instructions in the memory, to enable the communication apparatus to perform the method according to any one of claims 6 to 10.

13. A communication apparatus, comprising units configured to perform the method according to any one of claims 1 to 5.

14. A communication apparatus, comprising units configured to perform the method according to any one of claims 6 to 10.

15. A communication system, wherein the communication system comprises the communication apparatus according to claim 11 or 13 and the communication apparatus according to claim 12 or 14.

16. A computer-readable storage medium, wherein the storage medium stores a computer program or instructions, and when the computer program or the instructions are executed by a computer, the method according to any one of claims 1 to 5 or the method according to any one of claims 6 to 10 is implemented.

17. A computer program product, wherein when a computer reads and executes the computer program product, the computer is enabled to perform the method according to any one of claims 1 to 5 or the method according to any one of claims 6 to 10.
